# EUROPÄISCHE PATENTSCHRIFT

(11) **EP 1 762 871 B1**
(45) Veröffentlichungstag und Bekanntmachung des Hinweises auf die Patenterteilung: **07.01.2009**
(21) Anmeldenummer: 06405378.8
(22) Anmeldetag: 04.09.2006
(51) Int. Cl.: G02B 6/38

(54) **Gesichertes Steckverbindungssystem**
Secured connector system
Système de connecteur sécurisé

(30) Priorität: 12.09.2005 EP 05405534
(43) Veröffentlichungstag der Anmeldung: 14.03.2007
(73) Patentinhaber: Reichle & De-Massari AG, 8622 Wetzikon (CH)
(72) Erfinder: Friedrich, Giorgio, 8442 Hettlingen (CH); Leutwyler, Werner, 8053 Zürich (CH); Fry, Carli, 8852 Altendorf (CH)
(74) Vertreter: Frei Patent Attorneys

(56) Entgegenhaltungen:
- EP-A- 0 849 839
- DE-A1- 10 113 529
- US-A- 5 420 951
- PATENT ABSTRACTS OF JAPAN Bd. 1999, Nr. 03, 31. März 1999 (1999-03-31) -& JP 10 332987 A (JAPAN AVIATION ELECTRON IND LTD), 18. Dezember 1998 (1998-12-18)

## Beschreibung

Die Erfindung betrifft die mechanische Verriegelung und somit die Sicherung von Steckverbindungssystemen.

Aus Sicherheits- und Haftungsgründen ist es oft wichtig, dass Steckverbindungen zwischen elektrischen oder optischen Leitern so abgesichert sind, dass ein unbeabsichtigtes oder eventuell unbefugtes Trennen der Verbindung verunmöglicht oder zumindest erschwert wird.

Besonders aktuell sind solche Anforderungen an Steckverbindungen im Bereich der optischen Datenübertragung mittels Lichtwellenleitern. Um eine bessere Ausnutzung der bestehenden Infrastruktur und eine Erhöhung der Kapazität zu erreichen, wird in diesen die optische Leistung der durch die Wellenleiter geleiteten Strahlung laufend erhöht. Dies kann über eine oder mehrere der folgenden Massnahmen geschehen:
- Erhöhung der Faserzahlen, verbunden mit einer physikalischen Kapazitätserhöhung der lichtführenden Pfade,
- Ausnutzung des Zeitmultiplexings, hohe Bitrate,
- Verwendung von mehreren optischen Trägern (gleichzeitige Datenübertragung über mehrere Wellenlängen; bis zu 50 Kanäle pro optisches Fenster).

Hinzu kommt die Bestrebung, hohe Distanzen unter Wegfall von OEO-Wandlern zu überwinden, was den Unterhalt der Netze vereinfacht und somit die Investitionen nachhaltig verringert.

All diese Anpassungen bzw. Möglichkeiten bedingen aber eine durchgehend hohe Zuverlässigkeit der verwendeten Komponenten. Hierzu gehört ganz besonders der optische Steckverbinder, da die genannten Massnahmen mit markant hohen optischen Leistungen verbunden sind. Die transmittierten Leistungen können bis zu einigen MW/cm² betragen.

Leistungen von dieser Grössenordnung bringen nebst dem Bedürfnis nach hoher Betriebssicherheit und Zuverlässigkeit auch die Notwendigkeit eines funktionierenden Personenschutzes mit sich. Damit verbunden ist auch das Bedürfnis der Hersteller, dass die Sicherung so ausgelegt ist, dass bei unberechtigter Öffnung einer Verbindung Grobfahrlässigkeit geltend gemacht werden kann. Dies kann bspw. bedingen, dass zur Öffnung einer Verbindung Gewalt angewendet werden muss oder gar die Zerstörung der Kupplung in Kauf genommen werden muss.

Die zum jetzigen Zeitpunkt am Markt erhältlichen optischen Steckverbindungen, aber auch einige elektrische Signal-Steckverbindungen sind Verbindungen zwischen Steckern ("male connectors") unter Zuhilfenahme einer Kupplung (Zwischenstück) oder eines Adapters, in welche(n) beidseitig je mindestens ein Stecker einführbar ist. Im Falle von optischen Steckverbindungen kann die Kupplung jeweils so ausgelegt sein, dass eine mechanische Verriegelung sicherstellt, dass die Ferrulen der vollständig eingeführten Stecker aufeinander gedrückt werden, um im Allgemeinen durch einen physischen Kontakt eine möglichst verlustarme Übertragung der Lichtwellen zu gewährleisten. (mit "Lichtwellen" wird in diesem Text durchgehend nicht nur auf sichtbares Licht, sondern generell auf elektromagnetische Wellen, insbesondere auch im Infrarotbereich verwiesen. Speziell bevorzugter Bereich: 0.1 µm bis 5 µm).

Es sind bereits viele Sicherungsvorrichtungen für Steckverbindungen bekannt. Zum bekannten Stand der Technik gehören verschraubte Verbindungen, Bajonett-Verbindungen, Push-Pull-Verbindungen, so genannte latched Push-Pull-Verbindungen sowie kombinierte Lösungen.

Eine beispielsweise von elektrischen Steckverbindungen des Typs RJ-45 oder aus den Schriften WO 03/104870 und US 6,821,024 bekannte Lösung beruht auf einem einrastbaren Rastmittel (Rastklinke) sowie auf einem Blockierelement, welches ein Betätigen des Rastmittels im eingerasteten Zustand verhindert, wenn dieses Blockierelement nicht durch eine gesonderte Bewegung, bspw. entgegen einer Federkraft verschoben oder entfernt wird. Eine andere aus dem Stand der Technik bekannte Lösung beinhaltet ein Rastmittel, welches so im Gehäuse angebracht ist, dass es für den Benutzer nicht zugänglich ist. Stattdessen ist ein am Stecker ausgebildeter Entriegelungshebel vorhanden, durch welchen das Rastmittel betätigbar ist. Eine solche Lösung ist bspw. aus der Schrift EP 0 616 236 bekannt.

Eine Lösung mit separatem Entriegelungselement ist des Weiteren aus der Schrift EP 0 849 839 bekannt.

Diese Lösungen bringen zwar eine etwas erhöhte Sicherheit, bieten aber nach wie vor keinen Schutz vor unbefugtem Trennen der Steckverbindung. Insbesondere für das Trennen der Steckverbindung gemäss EP 0 616 236 ist auch nur eine einzige Handbewegung nötig, so dass der Schutz gegen unerlaubtes Trennen nicht gewährleistet ist.

Aus der deutschen Offenlegungsschrift 101 13 529 ist eine Sicherungsvorrichtung für eine Steckverbindung bekannt, welche ein vor der Buchse befestigbares manschettenförmiges Gehäuse aufweist, welches die Rastklinke des Steckers im eingeführten Zustand so abdeckt, dass sie nicht werkzeugfrei betätigt werden kann. Das Gehäuse weist eine schlüssellochähnliche Öffnung auf, in welche ein spezifisches Hilfsmittel, bspw. ein Schlüssel einführbar ist, mit dem die Rastklinke betätigt werden kann. Diese Lösung bietet eine gewisse Sicherheit vor unautorisiertem Lösen der Rastverbindung. Sie ist aber nur für bestimmte Steckverbindungssysteme anwendbar, und sie benötigt relativ viel Platz vor der Buchse sowie um die Buchse herum. Diese Lösung ist insbesondere nicht für bestimmte Systeme wie bspw. das Steckverbindungssystem LSH anwendbar, die für die optische Kommunikation von Bedeutung sind.

Es ist Aufgabe der Erfindung, eine Sicherungsvorrichtung für elektrische und optische Steckverbindungen zur Verfügung zu stellen, welche Nachteile des Standes der Technik überwindet und welche den vorstehend erwähnten erhöhten Sicherheitsbedürfnissen Rechnung trägt, insbesondere dass der Rechtsanspruch der Grobfahrlässigkeit geltend gemacht werden kann.

Diese Aufgabe wird erfindungsgemäss durch ein Steckverbindungssystem gemäss den unabhängigen Patentansprüchen gelöst.

Das Steckerteil weist mindestens einen Stecker (,male') auf. Das Buchsen-, Adapter-oder Kupplungsteil kann eine Buchse ('female') zum Zusammenwirken mit einem entsprechenden Stecker sein. Andererseits kann es ein Adapter sein, welcher als Interface dient. Es kann aber auch ein Zwischenstück (ebenfalls 'female') sein, in welches beidseitig je mindestens ein Stecker einführbar ist, so, dass die von beiden Seiten eingeführten Stecker miteinander in elektrischem Kontakt sind bzw. dass Licht vom einen Stecker in den anderen Stecker einkoppelbar ist. Das Steckerteil ist bspw. ein Stecker oder Mehrfachstecker.

Das Aufnahmeelement kann fest oder schwenkbar am Steckerteil angebracht sein.

Das federnde Element (bspw. Rastklinke) des Buchsen-, Adapter- oder Kupplungsteils ist im gekoppelten Zustand der Steckverbindung hinter einem Sperrelement des Steckerteils oder Aufnahmeelemnents eingerastet. Zum Trennen der Rastverbindung muss das federnde Element entgegen der Federkraft über das Sperrelement angehoben werden. Durch das erfindungsgemässe Vorgehen ist das nur bei eingeführtem Entriegelungselement möglich. Das Anheben kann durch das Entriegelungselement selbst geschehen.

Der Begriff "Rastklinke" bedeutet nicht, dass dieses Element notwendigerweise so ausgebildet ist wie von Rastklinken gemäss dem Stand der Technik bekannt. Vielmehr ist damit jedes Element gemeint, welches beim Einschieben eines Steckerteils in das entsprechende Buchsen- Adapter- oder Kupplungsteils aufgrund einer Federwirkung hinter einem entsprechend ausgeformten Sperrelement einrastet und dadurch verhindert, dass die Steckverbindung ohne weiteres wieder getrennt werden kann.

Das federnde Element (bspw. Rastklinke) der Rastverbindung ist im Allgemeinen so im Gehäuse der Buchse bzw. des Adapter- oder Kupplungsteils angeordnet dass es von Hand ohne entsprechendes Hilfsmittel nicht direkt zugänglich ist und nicht betätigt werden kann. Die Funktion des Entriegelungselementes (oder eines mit diesem wirkverbundenen Übergangselementes) ist diejenige eines ins Gehäuse eingreifenden Werkzeuges, mit welchem die Rastklinke über das Sperrelement angehoben wird.

Die erfindungsgemässe Kombination bewirkt eine Reihe von Vorzügen. So kann durch das erfindungsgemässe Anbringen des federnden Elementes am Buchsen-, Adapter- bzw. Kupplungsteil das federnde Element so angeordnet sein, dass das Buchsen- Adapter- oder Kupplungsteil-Gehäuse zur Abdeckung dient und verhindert, dass das federnde Element von aussen zugänglich ist, wenn das Steckerteil eingesteckt ist. Es ist kein separates, Platz beanspruchendes Gehäuse dafür notwendig. Das Aufnahmeelement (mit schlossähnlicher Funtion) hingegen ist am Steckerteil vorhanden, so dass auch das Entriegelungselement (mit schlüsselähnlicher Funktion) zum Steckerteil passen muss und nicht zum Buchsen-, Adapter- bzw. Kupplungsteil. Dadurch wird bspw. die Situation verhindert, dass aus Bequemlichkeit bei der Buchse jeweils gerade das passende Entriegelungselement deponiert wird. Zusätzlich ergibt sich der Vorteil der Nachrüstbarkeit bestehender Systeme, bspw. des Steckverbindungssytems LSH. Ausserdem wird wie nachstehend noch eingehender diskutiert eine mechanische Codierung ermöglicht, können doch das Aufnahmeelement und das Buchsen-, Adapter- bzw. Kupplungsteil so codiert sein, dass nur bestimmte Aufnahmeelemente in die entsprechende Buchse oder das entsprechende Kupplungsteil passen.

In denjenigen Ausführungsformen, in welchen das Entriegelungselement selbst die Rastverbindung trennt, indem es ggf. das federnde Element (bspw. Rastklinke) anhebt, gibt es verschiedene Varianten für die Art der Betätigung. Gemäss einer ersten Variante weist das federnde Element (Rastklinke) eine rampenartige Fläche auf. Bei Einschieben der bspw. dornartigen Ausformung des Entriegelungselementes gleitet diese der rampenartigen Fläche entlang und hebt dadurch die Rastklinke über das Sperrelement an. Gemäss einer zweiten Variante wird die Rastklinke durch eine Drehbewegung des Entriegelungselementes - in der Art eines Schlüssels, welcher in ein Schloss eingeführt ist - angehoben. Weitere Varianten sind denkbar, bspw. mit einer rampenartigen Fläche am Entriegelungeselement.

In einer anderen Ausführungsform besitzt das dann als Betätigungselement ausgebildete Aufnahmeelement ein relativ zur Rastklinke verschiebbares Übertragungselement. Das Betätigungselement weist weiter bspw. einen Kipphebel auf, durch welchen die Rastverbindung getrennt wird. Bei Betätigung des Betätigungselements ist es das Übertragungselement, welches das vom Benutzer angelegte Moment vom Kipphebel auf die Rastklinke überträgt und diese anhebt. Das Übertragungselement ist aber so ausgebildet, dass es bei Betätigung des Kipphebels ausweicht und die Rastklinke deshalb nicht anheben kann, ausser es wird durch das eingeführte Entriegelungselement relativ zu der Rastklinke blockiert.

Besonders bevorzugt ist, dass das Aufnahmeelement nicht direkt am Rest des Steckerteils angeformt, d.h. das Steckerteil ist nicht einstückig. Diese Lösung ist insbesondere in denjenigen Ausführungsformen von grossem Vorteil, in welchen das Entriegelungselement selbst (direkt) die Rastverbindung trennt. Während das Entriegelungselement als eine Art "Schlüssel" zum Trennen der Verbindung fungiert, ist das Aufnahmeelement so etwas wie ein "Schloss", zu welchem der Schlüssel passen muss. Ein ganz besonderer Vorteil dieser Ausführungsform ist die Kompatibilität zu bestehenden Systemen und die hierdurch erreichte Nachrüstbarkeit bestehender Systeme. So kann bspw. in einem EP 0 616 236 entsprechenden System der Kipphebel zur Betätigung der Rastklinke durch das Aufnahmeelement ersetzt werden. Das Aufnahmeelement kann wie der Kipphebel durch Befestigungsnocken angebracht werden, wobei das Aufnahmeelement nicht kippbar zu sein braucht und ggf. so ausgeformt ist, dass es an entsprechenden Flächen des Steckerteils ansteht und deshalb nicht kippbar ist.

In allen Ausführungsformen kann das Entriegelungselement (optional) eine Einrastnase aufweisen, welche im eingeführten Zustand in eine Einrastnut des Steckerteils einrastet und das Entriegelungselement lösbar an der Steckverbindung (bzw. dem Steckerteil) hält. Selbstverständlich ist auch das Umgekehrte denkbar, also eine Einrastnut am Entriegelungselement und eine Einrastnase am Stecker- oder am Buchsen-, Adapter- oder Kupplungsteil. Die Einrastnase kann durch Betätigen eines Entrasthebels am Entriegelungselement aus der Einrastnut angehoben werden, worauf das Entriegelungselement entfernt werden kann.

Die Elemente der erfindungsgemässen Steckverbindung (Steckerteil/Buchsen-, Adapter- oder Kupplungsteil) können vorzugsweise durch einen Benutzer ohne separate Hilfsmittel und ohne spezielle Massnahmen miteinander verrastet werden, wie das auch aus dem Stand der Technik bekannt ist. Hingegen bewirkt das erfindungsgemässe Vorgehen eine im Vergleich zum Stand der Technik erhöhte Sicherheit bezüglich Trennen der Verbindung. Es bewirkt sowohl einen Vorteil bezüglich der Personensicherheit als auch bezüglich Produktehaftungsaspekten als auch bezüglich der Betriebssicherheit. Eine erhöhte Personensicherheit und Betriebssicherheit ist dadurch gewährleistet, dass ein unbeabsichtigtes Trennen der Steckverbindung durch eine bspw. unglückliche Kombination zweier Bewegungen nicht möglich ist. Die Steckverbindung ist nur trennbar, indem ein sich im Betriebszustand nicht bei der Steckverbindung befindliches Entriegelungselement zur Steckverbindung gebracht und dort gezielt eingeführt wird. Dies ist auch unter Produktehaftungsaspekten vorteilhaft, denn jedes zerstörungsfreie Trennen der Verbindung ist nachweislich unter Zuhilfenahme des Entriegelungselementes zustande gekommen. Es war demgemäss beabsichtigt und wurde durch Personen vorgenommen, denen ein Entriegelungselement zur Verfügung stand, und an die spezielle Anforderungen (Berechtigung etc.) gestellt werden konnten. Der Hersteller hat demzufolge seine Sorgfaltspflicht erfüllt. Ein eventuelles nicht autorisiertes Trennen der Steckverbindung ist auf Nachlässigkeit bzw. Grobfahrlässigkeit des Benutzers zurückzuführen.

Noch weitere Sicherheitselemente ergeben sich durch die Codierungsmöglichkeiten. Eine erste - mechanische - Codierungsmöglichkeit bietet das erfindungsgemässe Vorgehen dadurch, dass die Ausformungen des Entriegelungselementes und des Aufnahmeelementes aufeinander abgestimmt werden. So können bspw. für verschiedene Systeme/Anwendungen/Benutzer verschiedene Ausformungs-Querschnittsformen gewählt werden, bspw. verschiedene Vieleck-Formen, T-Formen, Winkel etc. Es gibt eine zweite mechanische Codierungsmöglichkeit, die ein vollständiges Einführen des Entriegelungselementes bei fehlender Übereinstimmung verhindert. Diese besteht, indem das Entriegelungselement zum Aufnahmeelement hin separate Codierungen - bspw. Codierungs-Vorsprünge und - Aussparungen - aufweist, welche mit entsprechenden Codierungen des Steckerteils zusammenwirken und welche bei fehlender Übereinstimmung bewirken, dass das Entriegelungselement - bzw. die Ausformung - nicht vollständig und wirksam eingeführt werden kann, was wiederum ein Trennen der Steckverbindung verunmöglicht. Herstellungstechnisch besonders günstig sind diese beiden Arten der Codierung, wenn das Aufnahmeelement separat vorhanden, d.h. nicht am Rest des Steckerteils angeformt ist: Für Steckverbindungen unterschiedlicher Codierungen muss das Stecker- bzw. Buchsen-, Adapter- oder Kupplungsteil in nur einer Ausführung hergestellt werden; lediglich das Aufnahmeelement muss in verschiedenen Formen angeboten werden. Gleichzeitig zur mechanischen Codierung kann auch eine Farbcodierung vorhanden sein. Eine dritte Möglichkeit der Codierung ergibt sich zwischen Aufnahmeelement und Buchsen-, Adapter- oder Kupplungsteil. Aufgrund des erfindungsgemässen Aufnahmeelements ergeben sich in Kombination mit dem erfindungsgemässen Vorgehen auch hier herstellungstechnische Vorteile, müssen doch auch für diese Codierung nicht verschiedene Ausführungen des Steckers bzw. Buchsen-, Adapter- oder Kupplungsteils hergestellt werden. Die zweite und dritte Art der Codierung kann bspw. an einer Vorder- und Hinterseite des Aufnahmeelements vorgesehen sein. Die entsprechende Codierung des Buchsen-, Adapter- oder Kupplungsteils kann an der Buchse selbst oder an einem an dieser befestigbaren Codierungselement (bspw. in der Art eines umlaufenden Rahmens) ausgeführt sein.

Gegenstand der Erfindung ist auch ein Stecker für ein erfindungsgemässes Steckverbindungssystem gemäss dem unabhängigen Patentanspruch 19.

Im Folgenden werden Ausführungsbeispiele der Erfindung anhand von Zeichnungen im Detail beschrieben. In den Zeichnungen zeigen:
- Fig. 1 eine Schnittdarstellung einer partiellen Ansicht eines erfindungsgemässen Steckverbinders, wobei die elektrischen Kontakte bzw. die Ferrulen der Lichtwellenleiter nicht gezeichnet sind,
- Fig. 2, 3 und 4 je eine Darstellung eines Entriegelungselementes, eines Aufnahmeelementes und des ins Aufnahmeelement eingeführten Entriegelungselementes des Ausführungsbeispiels gemäss Fig. 1, in unterschiedlicher Vergrösserung dargestellt,
- Fig. 5 Ansichten eines Steckerteils und eines aus Draht geformten Entriegelungselementes (separat und ins Steckerteil eingeführt) eines alternativen Ausführungsbeispiels der Erfindung,
- Fig. 6 eine Ansicht eines Aufnahmeelementes und eines Entriegelungselementes eines weiteren Ausführungsbeispiels,
- Fig. 7 eine Schnittdarstellung eines Ausführungsbeispiels der Erfindung, bei welchem das Steckerteil ein Betätigungselement aufweist,
- Fig. 8 eine Darstellung eines Betätigungselementes und eines Entriegelungselementes eines weiteren,
- Fig. 9 eine Duplex-Version des Ausführungsbeispiels aus Figur 5 in verschiedenen Ansichten.

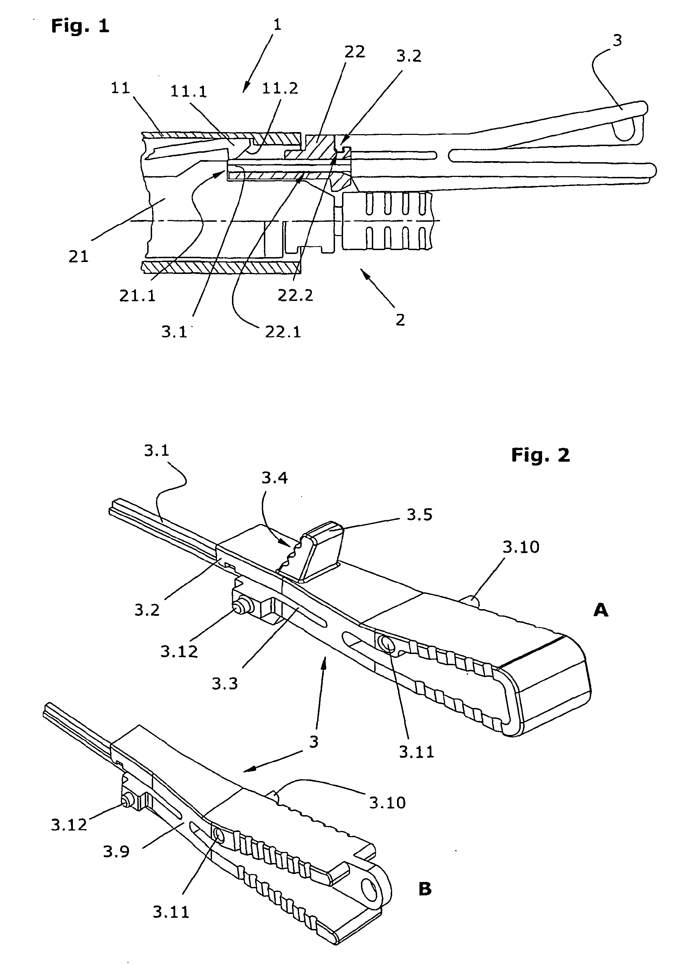

Die in Figur 1 ausschnittweise gezeigte Steckverbindung umfasst ein Buchsen-, Adapter- respektive Kupplungsteil 1, ein Steckerteil 2 mit Aufnahmeelement 22 und ein Entriegelungselement 3. Innerhalb des Buchsen-, Adapter- respektive Kupplungsteils 11 und für einen Benutzer nicht zugänglich weist das Buchsen-, Adapter- respektive Kupplungsteil eine Rastklinke 11.1 auf, welche im eingesteckten Zustand des Steckers 2 hinter einem Sperrelement 21.1 desselben einrastet. Im gezeichneten Ausführungsbeispiel ist das Sperrelement 21.1 am Steckergehäuse 21 ausgeformt. Der Stecker 2 weist weiter das mit dem Steckergehäuse 21 nicht einstückige, aber an diesem befestigte Aufnahmeelement 22 auf.

Im gezeichneten Zustand wäre es ohne Entriegelungselement nicht möglich, den Stecker zu ziehen ohne Bauteile der Steckverbindung zu zerstören oder zumindest zu beschädigen.

Das Entriegelungselement 3 weist eine Ausformung 3.1 auf, welche in eine entsprechende Ausformung 22.1 - ein Loch - des Aufnahmeelementes 22 einführbar ist. Wenn die Ausformung 3.1 des Entriegelungselementes vollständig eingeführt ist, wird aufgrund der rampenartigen Fläche 11.2 der Rastklinke 11.1 diese angehoben und das Sperrelement 21.1 freigegeben: der Stecker kann gezogen werden.

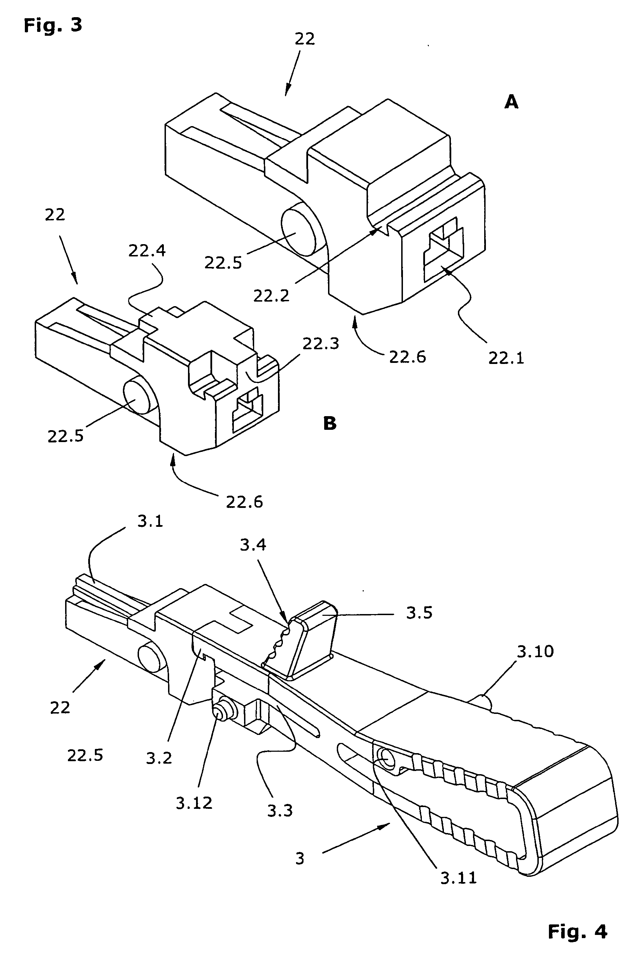

In den Figuren 2 bis 4 sieht man, dass die Ausformungen 3.1, 22.1 des Entriegelungselementes 3 und des Aufnahmeelementes 22 eine spezielle - hier T-förmige - Querschnittfläche haben und im Wesentlichen passgenau ineinander greifen. Zwischen dem Aufnahmelement und dem Entriegelungselement existiert also eine Art Schloss/Schlüssel-Beziehung. Durch die Wahl der Querschnittfläche ergibt sich die vorstehend erwähnte erste Codierungsmöglichkeit. Wie man am besten in Figur 4 sieht, ist im Ausführungsbeispiel der Figuren 1 bis 4 die Ausformung 3.1 des Entriegelungselementes 3 notwendigerweise länger als die Tiefe des Lochs, das durch die Ausformung 22.1 des Aufnahmeelementes gebildet wird. Dies ist Voraussetzung dafür, dass die Rastklinke 11.1 durch Einführen der Ausformung 3.1 angehoben werden kann.

Im gezeichneten Beispiel besitzt die Paarung Aufnahmeelement/Entriegelungselement 22, 3 zusätzlich eine Einrastvorrichtung, welche das lösbare Verrasten ermöglicht. Die Einrastvorrichtung besteht hier aus einer Rastnase 3.2 des Entriegelungselementes 3, welches mit einer Rastnut 22.2 des Aufnahmeelementes zusammenwirkt. Die Einrastvorrichtung ermöglicht es, dass bei vollständig eingeführtem Entriegelungselement die Steckverbindung durch ein Ziehen am Entriegelungselement in Richtung der Steckerachse getrennt werden kann, was aufgrund der oft gewählten Dimensionierungen von Buchsen-, Adapter-oder Kupplungsteil und Steckerteil sowie der engen Platzverhältnisse auf Steckfeldern mit einer Mehrzahl von gesteckten Steckern komfortabel sein kann. Zum Lösen der Einrastvorrichtung weist das Entriegelungselement 3 bspw. einen Einschnitt 3.3 auf und ist dadurch leicht elastisch verformbar. Es besteht bspw. aus einem harten, aber doch elastisch verformbaren Kunststoff. Durch Druck auf eine Betätigungsfläche 3.4 eines beispielsweise vorhanden Entrasthebels 3.5 (Figur 2, Zeichnung A) kann der Benutzer die Rastnase 3.2 leicht anheben und anschliessend das Entriegelungselement entfernen.

Als Alternative zur vorgenannten Ausführung mit Entrasthebel kann das Entriegelungselement 3 auch bspw. gemäss Figur 2, Zeichnung B ausgeführt sein. In dieser Variante ist ein Gelenk 3.9 vorhanden, aufgrund dessen sich die Rastnase durch Zusammendrücken des Entriegelungselementes in einer hinteren Partie anheben lässt - ähnlich des Funktionsprinzips einer Wäscheklammer.

Wie man in Figur 3 am besten sieht, weist das Aufnahmeelement 22 in der gezeichneten Ausführungsform Befestigungsnocken 22.5 auf, mittels welchem es am Steckergehäuse 21 befestigt ist. Diese Befestigungsnocken 22.5 und entsprechende Aussparungen im Steckergehäuse können analog zu Drehnocken bzw. Aussparungen eines Kipphebels bzw. Steckergehäuses von Steckverbindungen eines bestehenden Systems, bspw. Typ LSH, ausgebildet sein und daher vollständige Kompatibilität zu diesem bestehenden System gewährleisten. Es ist sogar möglich, ein bestehendes System nachträglich mit erfindungsgemässen Komponenten zu versehen und so in ein erfindungsgemässes System umzugestalten. Im Unterschied zum Kipphebel eines bestehenden Systems ist das Aufnahmeelement 22 (bis auf eventuelles Spiel) nicht kippbar, da es eine Anschlagfläche 22.6 aufweist, die auf einer entsprechenden Anschlagfläche des Steckergehäuses aufliegt.

In Figur 3 zeigt Zeichnung A das Aufnahmeelement 22 ohne Codierung, Zeichnung B mit zwei Codierungen entsprechen der vorstehend erwähnten zweiten und dritten Codierungsmöglichkeiten.

Die zweite Codierung ergibt sich zwischen dem Entriegelungselement und dem Aufnahmeelement wie folgt: Am Entriegelungselement sind charakteristische geometrische Merkmale vorhanden, welche entsprechenden Merkmalen des Aufnahmelementes entsprechen und sich bspw. dort befinden, wo beim gezeichneten Beispiel die Rastnase 3.2 angeformt ist, oder auf der gegenüberliegenden (in der Darstellung unteren) Seite. In Zeichnung B ist ein Beispiel gezeichnet: Ein (in Bezug auf die Steckverbindung) äusserer Codierungsvorsprung 22.3 wirkt zwischen dem Aufnahmeelement (oder in anderen Ausführungsformen dem Steckergehäuse) und dem Entriegelungselement 3, was auch in Figur 4 dargestellt ist. Ein solcher äusserer Codierungsvorsprung kann bspw. bei Steckverbindungen vorgesehen sein, bei welchen ein besonders hoher Sicherheitsstandard gewährleistet sein muss. Die Entriegelungselemente 3 mit entsprechender Codierungsaussparung (Fig. 4) sind bspw. nur bei ausgewiesenen Spezialisten oder nur beim Hersteller oder dessen Vertragspartner vorhanden.

Die dritte Codierung wird in der gezeichneten Ausführungsform durch einen inneren Codierungsvorsprung 22.4 bewirkt. Dieser dient der mechanischen Codierung zusammen mit dem Buchsen-, Adapter- oder Kupplungsteil bzw. einem daran vorgesehenen Codierrahmen, der die geometrischen Elemente aufweist, durch welche die mechanische Codierung bewirkt wird. Diese - an sich bekannte - Art der Codierung verhindert, dass nicht kongruente Stecker in das entsprechende Buchsen-, Adapter- respektive Kupplungsteil eingeschoben werden können.

Anstelle eines Codierungsvorsprungs und einer entsprechenden Aussparung können natürlich bei beiden Codierungsmöglichkeiten auch andere Arten der mechanischen Codierung mit kongruenten Formen gewählt werden.

Die Entriegelungselemente gemäss Figuren 2 und 4 weisen noch eine Vorrichtung zum passgenauen Zusammenfügen von mehreren Entriegelungselementen derselben Art, bspw. für Duplex-Steckverbinder (hier nicht gezeigt, aber an sich dem Fachmann bekannt), auf. Diese Vorrichtung beinhaltet hier einen ersten seitlich vorstehenden Zapfen 3.10 und eine ebenfalls seitliche erste Aussparung 3.11, in welcher der Zapfen 3.10 eines anderen Entriegelungselementes einführbar ist. Im gezeichneten Beispiel ist noch ein zweiter seitlich vorstehender Zapfen 3.12 sichtbar, welcher in eine (nicht gezeichnete) zweite seitliche Aussparung eines benachbarten Entriegelungselementes einführbar ist.

Das Ausführungsbeispiel der Figuren 1 bis 4 sieht ein vom Steckergehäuse separates Aufnahmeelement vor; dies ist aber für den erfinderischen Gedanken keine Voraussetzung. Die vorstehend beschriebenen Merkmale können auch in einem Ausführungsbeispiel realisiert sein, bei welchem die Ausformung und die weiteren Merkmale des hier beschriebenen Aufnahmeelementes direkt am Steckergehäuse ausgebildet sind.

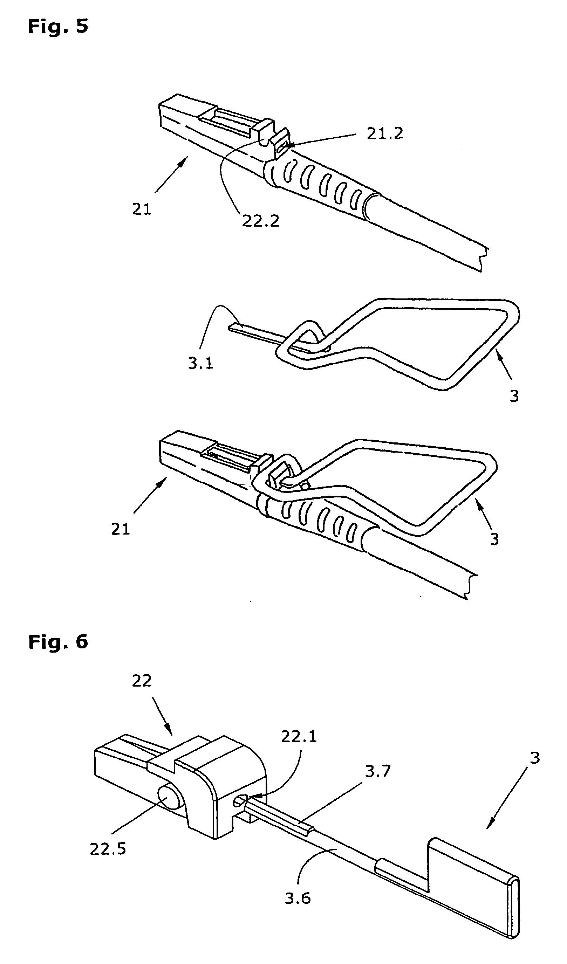

Eine weitere Variante des vorstehend beschriebenen Ausführungsbeispiels, bei welcher eine Ausformung 21.2 zum Einführen der entsprechenden Ausformung 3.1 des Entriegelungselementes 3 unmittelbar am Stecker 21 vorhanden ist, ist in Figur 5 gezeichnet. Diese Variante ist von der Funktionsweise dem vorstehend beschriebenen Beispiel ähnlich. Ein weiterer Unterschied zu diesem ist, dass das Entriegelungselement 3 nicht körperhaft und aus Kunststoff ausgebildet ist. Vielmehr ist es als gebogener und zum Teil bspw. geprägter Draht ausgeführt. Die Prägung des Drahtes findet sich in derjenigen Partie, welche die Ausformung 3.1 bildet. Sie hat ähnlich der T-Form (als Beispiel) des Ausführungsbeispiels der Figuren 1 bis 4 die Funktion einer Codierung. Auch diese T-förmige Ausprägung der Ausformung 3.1 hat die Funktion einer Codierung. Durch die entsprechende, nicht runde Ausgestaltung der Ausformungen 3.1, 21.1 ist weiter sichergestellt, dass die Verbindung nicht durch Einführen eines gewöhnlichen steifen Drahtes trennbar ist.

Noch eine Variante der vorstehend beschriebenen Ausführungsbeispiele ist in Figur 6 skizziert. Auch bei dieser Variante wird die Rastklinke des Buchsen-, Adapterrespektive Kupplungsteils direkt durch das Entriegelungselement 3 angehoben. Im Unterschied zu jener Ausführungsform geschieht dies aber optional nicht (nur) durch eine translatorische Bewegung - das Einschieben des Entriegelungselements - sondern durch eine rotatorische Bewegung, nämlich das Drehen des eingeschobenenen Entriegelungselements. Ähnlich der Ausführungsform der Figuren 1 bis 4 weist die Steckverbindung ein vorzugsweise mit dem Gehäuse des Steckerteils (nicht gezeichnet), oder aber mit dem Buchsen-, Adapter- respektive Kupplungsteil verbundenes Aufnahmeelement 22 auf. Die Ausformung 3.1 am Entriegelungselement 3 besitzt einen zylindrischen Abschnitt 3.6 und einen Entriegelungsvorsprung 3.7. Dieser besitzt hier im Querschnitt eine Form, welche der Form der Ausformung 22.1 am Aufnahmeelement 22 entspricht. Dadurch dient der Entriegelungsvorsprung 3.7 auch gleich der mechanischen Codierung. Die Funktion des Entriegelungsvorsprungs 3.7 ist ähnlich derjenigen eines Schlüsselbarts. Durch Drehen des Entriegelungselementes um eine Achse - entsprechend der Achse des zylindrischen Abschnitts 3.6 - wirkt der Entriegelungsvorsprung 3.7 als eine Art Mitnehmer und bewirkt dadurch die Entriegelung. Im beschriebenen Beispiel geschieht das, indem er die Rastklinke über das Sperrelement anhebt. Unter Umständen (je nach Dimensionierung des Buchsen-, Adapter- oder Kupplungsteils) ist es angebracht, den Entriegelungsvorsprung 3.7 abweichend von der Darstellung von Figur 6 zuvorderst an der Ausformung anzubringen oder bis zuvorderst an die Ausformung zu ziehen. Das Aufnahmeelement kann einen Anschlag für den Entriegelungsvorsprung 3.7 besitzen, wodurch dessen für das Entriegeln benötigte Orientierung für den Benutzer erkennbar bestimmt wird.

Ein Vorsprung von der Art des Entriegelungsvorsprungs 3.7 kann ergänzend oder alternativ zur beschriebenen Funktion eine weitere Funktion haben: Er kann durch Drehen des Entriegelungselementes - bspw. um 90° - hinter einen Blockiervorsprung des Steckergehäuses oder Aufnahmeelementes geschoben werden und damit das Entriegelungselement gegen ein Herausziehen aus dem Steckerteil blockieren. Dann ersetzt der genannte Vorsprung die Einrastnase: man kann das Steckerteil durch einen Zug am Entriegelungselement vom Buchsen-, Adapter- oder Kupplungsteil trennen. Die Entriegelung kann dabei wie vorstehend beschrieben oder wie im Ausführungsbeispiel gemäss den Figuren 1 bis 4 erfolgen.

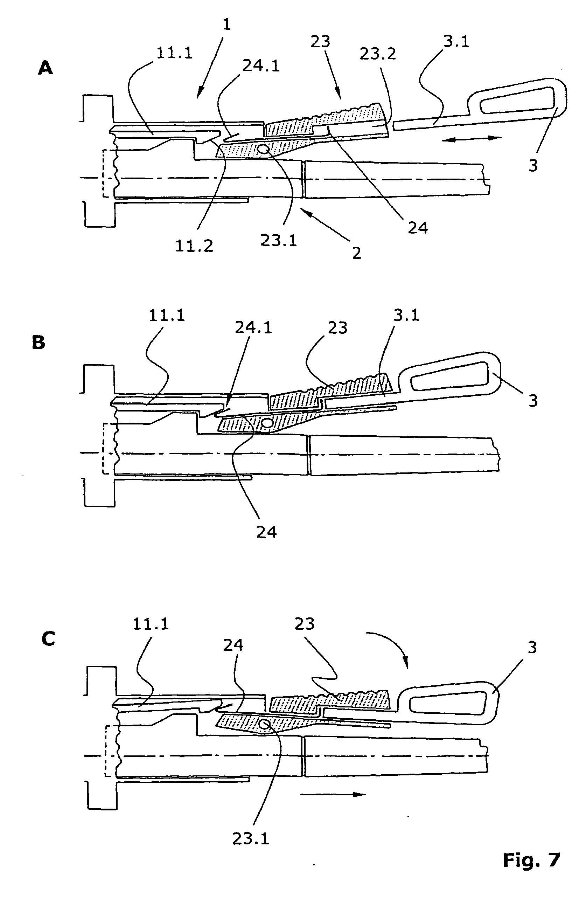

Die Ausführungsform gemäss Figur 7 weist als Aufnahmeelement ein vorzugsweise am Stecker befestigtes Betätigungselement 23 auf. Dieses ist bspw. als eine Art Kipphebel (mit Kippachse 23.1) ausgebildet. Durch Betätigen des Betätigungselements 23 (Kipphebel) wird die Rastklinke angehoben. Das Betätigungselement ist aber so ausgebildet, dass eine Betätigung wirkungslos ist, wenn das Entriegelungselement 3 nicht eingeführt ist. In der gezeichneten Ausführungsform wird das dadurch bewirkt, dass innerhalb des Betätigungselements ein Übertragungselement 24 vorhanden ist, welches die Kippbewegung an die Rastklinke überträgt. Das Übertragungselement 24 ist als innerhalb des Betätigungselements verschiebbares "Plättchen" (Feder) ausgebildet. Es besitzt bspw. eine mit der rampenartigen Fläche 11.2 der Rastklinke zusammenwirkende Rampe 24.1 auf. Aufgrund dieser Formgebung weicht das Übertragungselement wie in Zeichnung A der Figur 7 gezeichnet gegen aussen aus, wenn das Betätigungselement betätigt wird. Bei eingeführtem Entriegelungselement 3 wird ein Ausweichen des Übertragungselements 24 verhindert (Zeichnung B), wodurch die Rastklinke 11.1 durch Kippen des Betätigungselements angehoben wird (Zeichnung C).

Im hier gezeichneten Beispiel wird bei nicht eingeführtem Entriegelungselement das Übertragungselement 24 bei einer Betätigung des Betätigungselementes 23 aufgrund der Wirkung der Rampe zurückgeschoben. Es sind ergänzend oder alternativ auch andere Arten des Zurückstellens denkbar, bspw. aufgrund einer Federwirkung des Übertragungselementes oder eines separaten Federelementes (bspw. Zylinderfeder oder Druckfeder), was selbstverständlich durch entsprechende Ausgestaltung/Formgebung noch unterstützt werden kann, bspw. Unterstützung der Rückstellung durch federähnliche Ausgestaltung.

Wie in den vorstehenden Ausführungsbeispielen ist die Ausformung 3.1 vorzugsweise passgenau auf die Ausformung 23.2 des Steckerteils (hier am Betätigungselement 23) abgestimmt, so dass die Querschnittform gleichzeitig als Codierung wirken kann und dass die Verbindung nicht mit einem gewöhnlichen Hilfsmittel wie bspw. einem Draht trennbar ist.

Gemäss einer speziellen Ausführungsform bilden das Betätigungselement und das eingeführte Entriegelungselement zusammen eine Art Kipphebel zum Anheben der Rastklinke. In dieser Ausführungsform ist die genannte Ausformung, welche an Steckerteil oder Buchsen-, Adapter- respektive Kupplungsteil vorhanden ist, an diesem Betätigungselement ausgebildet. Das Bestätigungselement befindet sich bspw. im Wesentlichen innerhalb des Buchsenteils bzw. des Adapter- oder Kupplungsteils und erstreckt sich nur so weit aus dem entsprechenden Gehäuse, dass die Ausformung ein Einführen der entsprechenden Ausformung des Entriegelungselements erlaubt, dass es ein Benutzer aber nicht ohne Werkzeug betätigen kann. Das Entriegelungselement wirkt als eine Art Hebel zum Betätigen der Rastklinke. Die Ausformungen am Betätigungselement und Entriegelungselement sind so ausgebildet, dass sie durch einen Formschluss eine mechanisch feste Kopplung zwischen Betätigungselement und Entriegelungselement bewirken, sie können bspw. als im Querschnitt schwalbenschwanzförmige Feder mit entsprechender Nut ausgebildet sein.

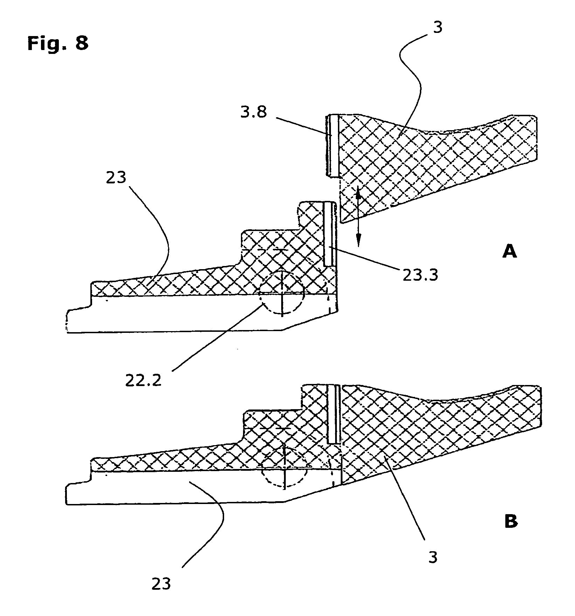

In Figur 8 ist eine solche Ausführungsform gezeichnet, in welcher das Entriegelungselement als Griff eines Kipphebels wirkt. In dieser Ausführungsform ist das Betätigungselement 23 so durch das Kupplungs- , Adapter-oder Buchsenteil abgedeckt, dass es bei nicht eingeführtem Entriegelungselement nicht betätigbar ist. Das Entriegelungselement 3 ist durch einen Formschluss mechanisch ans Betätigungselement 23 koppelbar und wirkt ans Betätigungselement 23 gekoppelt als Hebel bei der Betätigung desselben mit einer Kippbewegung, durch welche ein Anheben der Rastklinke erfolgt und der Stecker freigegeben wird, d.h. die Steckverbindung kann getrennt werden. In der gezeichneten Ausführungsform erfolgt das Ankoppeln des Entriegelungselements 3 ans Betätigungselement 23 durch eine schwalbenschwanzförmige Ausformung 3.8, welche mit einer entsprechenden Ausnehmung 23.3 einen Formschluss bewirkt. Das Befestigen des Entriegelungselements 3 erfolgt durch Einschieben, wie in Zeichnung A der Figur 8 gezeichnet. In Zeichnung B ist das Entriegelungselement 3 ans Betätigungselement 23 gekoppelt gezeichnet.

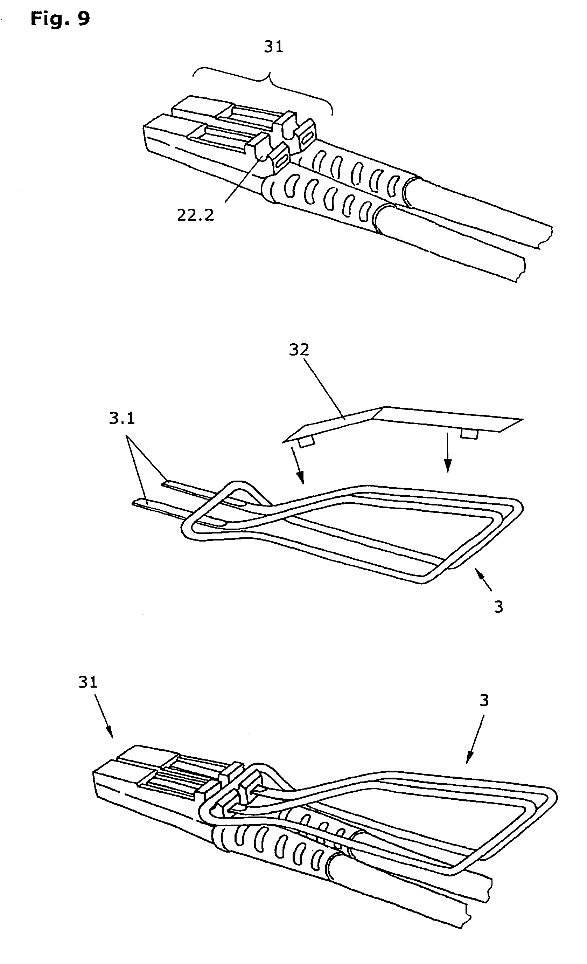

Die vorstehend beschriebenen Ausführungsformen zeigen jeweils die Verbindung eines einzelnen Steckers mit einer Buchse. Selbstverständlich eignet sich die Erfindung auch für Mehrfachsteck-Varianten. Als Beispiel ist in Figur 9 eine Verbindung mit Duplex-Stecker 31 gezeichnet. Das Entriegelungslement 3 besitzt entsprechend zwei Ausformungen 3.1. Ansonsten entspricht die Ausführungsform gemäss Figur 9 in ihrer Funktion den vorstehend beschriebenen Ausführungsformen, insbesondere derjenigen gemäss Figur 5, weshalb sie hier nicht weiter beschrieben wird. Eine Griffplatte 32 (Griffeinsatz) des Entriegelungselements 3 dient dazu, die Drähte zu stabilisieren und kann ferner dazu dienen, wie vorstehend beschrieben eine farbliche Codierung zu implementieren und/oder eine Beschriftung anzubringen.

Weitere Ausführungsformen sind denkbar. Zum Beispiel kann wie bei beschriebenen Ausführungsbeispielen ein Betätigungshebel an Stecker oder Buchse vorhanden sein. Der Betätigungshebel ist bspw. für den Benutzer zugänglich. Die Betätigung wird aber bei nicht eingeführtem Entriegelungselement durch ein Blockierelement verhindert. Dies kann bewirkt werden, indem das Blockierelement eine Auslenkung des Betätigungshebels verhindert, oder indem es direkt die Rastklinke blockiert. Das Blockierelement kann - bspw. entgegen der Wirkung einer Feder - durch das Entriegelungselement so verschoben werden, dass die Betätigung des Betätigungshebels freigegeben wird.

## Patentansprüche

1. Elektrisches oder optisches Steckverbindungssystem, aufweisend ein Buchsen-, Adapter- oder Kupplungsteil. (1), ein Steckerteil (2) und ein Rastmittel (11.1) durch welches eine zugfeste Rastverbindung zwischen dem Steckerteil und dem Buchsen-, Adapter- oder Kupplungsteil herstellbar ist, wobei das Rastmittel ein federndes Element aufweist, welches zum Lösen der Rastverbindung entgegen einer Federkraft bewegt werden muss, sowie ein vom Buchsen-, Adapter- respektive Kupplungsteil und vom Steckerteil separates, von diesen entfernbares Entriegelungselement (3) zum Trennen der Rastverbindung, wobei das Buchsen-, Adapter- oder Kupplungsteil (1) und das Steckerteil (2) so ausgebildet sind, dass die Steckverbindung im eingesteckten Zustand des Steckerteils zur Verwendung ohne das Entriegelungselement bestimmt ist, **dadurch gekennzeichnet, dass** das federnde Element am Buchsen-, Adapter- bzw. Kupplungsteil vorhanden ist, und dass das Steckerteil ein Aufnahmeelement (22, 23) mit einer Ausformung (22.1, 23.2, 23.3) aufweist, in welche im eingesteckten Zustand des Steckerteils eine in einem Querschnitt entsprechende Ausformung (3.1, 3.7, 3.8) des Entriegelungselements einführbar ist, wobei die eingeführte Ausformung des Entriegelungselementes so mit den Rastmitteln zusammenwirkt, dass das Bewegen des federnden Elements zum Lösen der Rastverbindung das Einführen des Entriegelungselementes voraussetzt.

2. Steckverbindungssystem nach Anspruch 1, **dadurch gekennzeichnet, dass** das federnde Element eine federnde Rastklinke (11.1) ist, welche im eingerasteten Zustand hinter einem Sperrelement (21.1) des Steckerteils eingerastet ist, und dass zum Trennen der Rastverbindung die Rastklinke bei eingeführtem Entriegelungselement (3) über das Sperrelement anhebbar ist.

3. Steckverbindungssystem nach Anspruch 2, **dadurch gekennzeichnet, dass** die Rastklinke (11.1) durch das eingeführte Entriegelungselement (3) Ober das Sperrelement (21.1) anhebbar ist.

4. Steckverbindungssystem nach Anspruch 3, **dadurch gekennzeichnet, dass** das Entriegelungselement (3) durch eine translalorische Bewegung in das Buchsen-, Adapter- respektive Kupplungsteil (1) teilweise einführbar ist, dass die Rastklinke (11.1) eine rampenartige Fläche (11.2) aufweist und dass bei Einführen des Entriegelungselementes dieses an der rampenartigen Fläche entlang gleitet und **dadurch** die Rastklinke (11.1) über das Sperrelement (21.1) anhebt.

5. Steckverbindungssystem nach Anspruch 3, **dadurch gekennzeichnet, dass** das Entriegelungselement (3) eine Drehachse und einen einseitig von der Drehachse vorstehenden Entriegelungsvorsprung (3.7) hat und dass die Rastklinke durch Drehen des eingeführten Entriegelungselementes über das Sperrelement (21.1) anhebbar ist.

6. Steckverbindungssystem nach einem der vorangehenden Ansprüche, **dadurch gekennzeichnet, dass** das Aufnahmeelement (22) als separates, mit dem restlichen Steckerteil nicht einstückiges Bauteil vorhanden ist und vorzugsweise durch Befestigungsnocken (22.5) am restlichen Steckerteil befestigt ist.

7. Steckverbindungssystem nach einem der Ansprüche 1-5, **dadurch gekennzeichnet, dass** das Aufnahmeelement (22) direkt an einem Steckergehäuse des Steckerteils und mit diesem einstückig ausgebildet ist.

8. Steckverbindungssystem nach Anspruch 1 oder 2, **dadurch gekennzeichnet, dass** das Aufnahmeelement als ein am Steckerteil (2) angebrachtes Betätigungselernent (23) ausgebildet ist, durch welches das federnde Element zum Lösen der Rastverbindung bewegbar ist, wein das Entriegelungselement (3) eingeführt ist.

9. Steckverbindungssystem nach Anspruch 8, **dadurch gekennzeichnet, dass** das Bctätigungseicment (23) ein relativ zu der Rastklinke (11.1) verschiebbares Übertragungselement (24) aufweist, das durch das Entriegelungselement (3) so relativ zum federnden Element blockierbar ist, dass eine Betätigung des Betätigungselementes bei blockiertem Übertragungselement ein Anheben des federnden Elements über ein Sperrelement (21.1) des Steckerteils (2) gewirkt.

10. Steckverbindungssystem nach einem der vorangehenden Ansprüche, **dadurch gekennzeichnet, dass** die Ausformung (22-1, 23.2) des Aufnahmeelementes eine Öffnung und die Ausformung (3.1) des Entriegelungselementes ein stiftartiger Vorsprung ist.

11. Steckverbindungssystem nach Anspruch 10, **dadurch gekennzeichnet, dass** die Ausformungen (3.1, 22.1, 23.2) des Entriegelungselementes (3) und des Aufnahmeelementes sich in einem Querschnitt entsprechen, so dass die genannten Ausformungen passgenau ineinander einführbar sind, wodurch sich eine erste mechanische Codierung ergibt.

12. Steckverbindungssystem nach Anspruch 10 oder 11, **gekennzeichnet durch** eine zweite mechanische Codierung (22.3), mit geometrischen Elementen, welche jeweils an einer von den Ausformungen (22.1, 23.2, 3.1) des verschiedenen Partie des Aufnahmeelementes und des Entriegelungselementes vorhanden sind und welche bei fehlender Übereinstimmung verhindern, dass die Ausformung (3.1) des Entriegelungselementes (3) vollständig in die entsprechende Ausformung (22.1, 23.1) des Steckerteils einführbar ist.

13. Steckverbindungssystem nach einem der vorangehenden Ansprüche, wobei das Aufnahmeelement (22) als separates, mit dem restlichen Steckerteil nicht einstückiges Bauteil vorhanden ist **gekennzeichnet durch** eine dritte mechanische Codierung (22.4) des Aufnahmeelements (22) welche bei fehlender Übereinstimmung verhindert, dass das Steckerteil (2) mit dem Buchsen-, Adapter- oder Kupplungsteil (1) zusammenführbar ist.

14. Steckverbindungssystem nach einem der vorangehenden Ansprüche, **dadurch gekennzeichnet, dass** das Entriegelungselement in einen Zustand bringbar ist, in welchem das Steckerteil durch einen Zug am Entriegelungselement vom Buchsen-, Adapter- oder Kupplungsteil trennbar ist.

15. Steckverbindungssystem nach Anspruch 14, **dadurch gekennzeichnet, dass** das Entriegelungselement (3) eine Einrastnase (3.2) aufweist, welche im eingeführten Zustand des Entriegelungselementes in eine Einrastnut (22.2) des Steckerteils (2) einrastbar ist.

16. Steckverbindungssystem nach Anspruch 15, **dadurch gekennzeichnet, dass** das Entriegelungselmenent (3) einen Entrasthebel .(3.5) aufweist und dass die Einrastnase (3.2) durch Betätigung des Entrasthebels aus der Einrastnut (22.2) anhebbar ist.

17. Steckverbindungssystem nach Anspruch 15, **dadurch gekennzeichnet, dass** das Entriegelungselement (3) ein Gelenk (3.9) aufweist, dass sich die Einrastnase (3.2) bezüglich des Gelenks in einer vorderen Partie befindet und durch Zusammendrücken des Entriegelungselements in einer hinteren Partie aus der Einrasatnut (22.2) anheben lässt.

18. Steckverbindungssystem nach Anspruch 14, **dadurch gekennzeichnet, dass** das Entriegelungselement (3) einen Entriegelungsvorsprung (3-7) aufweist, der hinter einen Blockiervorsprung des Steckerteils (2) bringbar ist, wodurch das Entriegelungselement gegen ein Herausziehen aus dem Steckerteil blockierbar ist.

19. Stecker für ein Steckverbindungssystem nach einem der vorangehenden Ansprüche, aufweisend ein Sperrelement (21.1), hinter welches eine Rastklinke (11.1) einer Buchse, eines Adapters oder einer Kupplung einrastbar ist, wobei der Stecker zusätzlich ein Aufnahmelement (22) ,aufweist, in welchem eine Ausformung (22.1) vorhanden ist, in die eine in einem Querschnitt entsprechende Ausformung (3.1) eines Entriegelungselements (3) einführbar ist, wobei die Ausformung des Aufnahmeelements so ausgebildet und angeordnet ist, dass die eingeführte Ausformung des Entriegelungselementes die Rastklinke der Buchse des Adapters oder der Kupplung über das Sperrelement anheben kann.

## Claims

1. Electrical or optical plug-and-socket connection system, comprising a socket-, adapter- or coupling-part (1), a plug part (2) and latching means (11.1) with which a latched connection resistant to pulling of the plug may be established between the plug part and the socket-, adapter-, or coupling-part, wherein the latching means comprises a resilient element, which must be moved against a spring force to release the latched connection, as well as a release element (3) separate from the socket-, adapter- or coupling-part (1) respectively and from the plug part and a release element (3) removable from these for releasing the latched connection, wherein the socket-, adapter- or coupling-part (1) and the plug part (2) are designed such that the plug-and-socket connection, in plugged condition of the plug part, is determine for use without the release element, **characterized in that** the resilient element is present on the socket-, adapter- or coupling-part respectively and that the plug part comprises a receiving element (22, 23) with a structure (22.1, 23.2, 23.3), in which, in plugged condition of the plug, a member (3.1, 3.7, 3.8), corresponding in a cross section, of the release element is introducible, wherein the introduced member of the release element interacts with the latching means such that the moving of the resilient element for releasing the latched connection requires the introduction of the release element.

2. Plug-and-socket connection system according to claim 1, **characterized in that** the resilient element is a resilient latching notch (11.1), which is, in latched condition, latched behind a blocking element (21.1) of the plug part and that for separation of the latched connection the latching notch can, with introduced release element (3), be raised to above the blocking element.

3. Plug-and-socket connection system according to claim 2, **characterized in that** the latching notch (11.1) can be lifted by means of the introduced release element (3) to above the blocking element (21.1).

4. Plug-and-socket system according to claim 3, **characterized in that** the release element (3) is partly introducible by means of a translatory movement into the socket-, adapter- or coupling-part (1) respectively, that the latching notch (11.1) comprises a ramp-like area and that when introducing the release element it slides along the ramp-like area and thus raises the latching notch (11.1) to above the blocking element (21.1).

5. Plug-and-socket connecting system according to claim 3, **characterized in that** the release element (3) has a rotation axis and a release protrusion (3.7) protruding unilaterally from the rotation axis and that the latching notch can be raised to above the blocking element (21.1) by means of turning the introduced release element.

6. Plug-and-socket connection according to one of the preceding claims, **characterized in that** the receiving element (22) is designed as separate component, not being in one piece with the rest of the plug part and preferably being fixed to the rest of the plug part by means of fixing cams (22.5).

7. Plug-and-socket connection according to one of claims 1-5, **characterized in that** the receiving element (22) is formed directly on a plug casing and in one piece with it.

8. Plug-and-socket connection system according to one of claims 1 or 2, **characterized in that** the receiving element is designed as a operating element (23) attached to the plug part (2) by which the resilient element is movable for release, when the release element (3) is introduced.

9. Plug-and-socket connection system according to claim 8, **characterized in that** the operating element (23) comprises a transfer element (24) movable in relation to the latching element, which transfer element is thus blockable in relation to the resilient element, that an operation of the operating element with blocked transfer element effects a raising of the resilient element to above a blocking element (21.1) of the plug part (2).

10. Plug-and-socket connection system according to one of the preceding claims, **characterized in that** the structure (22.1, 23.2) of the receiving element is an opening and the member (3.1) of the release element is a pin-like protrusion.

11. Plug-and-socket connection system according to claim 10, **characterized in that** the structure and member (3.1, 22.1, 23.2) of the release element (3) and the receiving element, respectively, correspond to each other in a cross-section, such that the named structure and member are introducible into each other to fit accurately, by which a first mechanical encoding is provided.

12. Plug-and-socket system connection according to claim 10 or 11, **characterized by** a second mechanical encoding (22.3) with geometric elements, which respectively are provided on different sections of the receiving element and the release element than the structure and member (22.1, 23.2, 3,1), and which in absence of agreement prevent that the member (3.1) of the release elements (3) is completely introducible into the corresponding structure (22.1, 23.1) of the plug part.

13. Plug-and-socket system according to one of the preceding claims, wherein the receiving element (22) is designed as separate component, not being in one piece with the rest of the plug part, **characterized in that** a third mechanical encoding (22.4) of the receiving element (22), which in absence of agreement prevent that the plug part (2) can be brought together with the socket-, adapter- or coupling-part (1).

14. Plug-and-socket connection system according to one of the preceding claims, **characterized in that** the release element can be brought into a condition in which the plug part is separable from the socket-, adapter- or coupling-part by means of pulling on the release element.

15. Plug-and-socket connection system according to claim 14, **characterized in that** the release element (3) comprises a latching tappet (3.2), which is latchable in introduced condition of the release element into a latching groove (22.2) of the latching part (2).

16. Plug-and-socket connection according to claim 15, **characterized in that** the release element (3) comprises a release lever (3.5) and that the latching tappet (3.2) is raisable by moving the release lever out of the latching groove (22.2).

17. Plug-and-socket connection according to claim 15, **characterized in that** the release element (3) comprises a joint (3.9), that the latching tappet (3.2) is located in a front section in relation to the joint and is raisable out of the latching groove (22.2) by pressing together the release element in a rear section.

18. Plug-and-socket connection according to claim 14, **characterized in that** the release element (3) comprises a release protrusion (3.7) which is bringable behind a blocking protrusion of the plug part (2), through which the release element is blockable against pulling out of the plug part.

19. Plug for a plug-and-socket connection according to one of the preceding claims, comprising a blocking element (21.1) behind which a latching notch (11.1) of a socket, an adaptor or a coupling is latchable, wherein the plug additionally comprises a receiving element (22) with a structure (22.1), into chichi a member (3.1), corresponding in a cross section, of the release element (3) is introducible, wherein the structure of the receiving element is designed and arranged such that the introduced member of the release element can raise the latching notch of the socket of the adapter or the coupling to above the blocking element.

## Revendications

1. Système de fiche de raccordement électrique ou optique, qui présente une partie de douille, d'adaptation ou d'accouplement (1), une partie de fiche (2) et un moyen d'encliquetage (11.1) qui permet d'établir une liaison encliquetée résistant à la traction entre la partie de fiche et la partie de douille, d'adaptation ou d'accouplement,
le moyen d'encliquetage présentant un élément élastique qui doit être déplacé en opposition à une force élastique pour libérer la liaison encliquetée ainsi qu'un élément de déverrouillage (3) séparé de la partie de douille, d'adaptation ou d'accouplement et de la partie de fiche et qui peut en être éloigné pour libérer la liaison encliquetée,
la partie de douille, d'adaptation ou d'accouplement (1) et la partie de fiche (2) étant configurées de telle sorte que lorsque la partie de fiche est enfichée, la liaison enfichable est conçue pour être utilisée sans l'élément de déverrouillage,
**caractérisé en ce que**
l'élément élastique est prévu sur la partie de douille, d'adaptation ou d'accouplement,
**en ce que** la partie de fiche présente un élément de réception (22, 23) qui, lorsque la partie de fiche est en position enfichée, permet d'insérer dans une structure (22.1, 23.2, 23.3) une structure (3.1, 3.7, 3.8) de section transversale correspondante de l'élément de déverrouillage,
la structure insérée de l'élément de déverrouillage coopérant avec les moyens d'encliquetage de telle sorte que l'élément de déverrouillage doit être inséré pour que l'élément élastique puisse être déplacé en vue de libérer la liaison encliquetée.

2. Système de fiche de raccordement selon la revendication 1, **caractérisé en ce que** l'élément élastique est un cliquet élastique (11.1) qui, lorsqu'il est encliqueté, s'encliquette derrière un élément de blocage (21.1) de la partie de fiche et **en ce que** pour libérer la liaison encliquetée, le cliquet peut être relevé au-dessus de l'élément de blocage lorsque l'élément de déverrouillage (3) a été insérée.

3. Système de fiche de raccordement selon la revendication 2, **caractérisé en ce que** lorsque l'élément de déverrouillage (3) a été inséré, il permet au cliquet (11.1) d'être relevé au-dessus de l'élément de blocage (21.1).

4. Système de fiche de raccordement selon la revendication 3, **caractérisé en ce que** l'élément de déverrouillage (3) peut être partiellement inséré par un déplacement de translation dans la partie de douille, d'adaptation ou d'accouplement (1), **en ce que** le cliquet (11.1) présente une surface (11.2) en pente et **en ce que** lorsque l'élément de déverrouillage a été inséré, il glisse le long de la surface en pente et relève ainsi le cliquet (11.1) au-dessus de l'élément de blocage (21.1).

5. Système de fiche de raccordement selon la revendication 3, **caractérisé en ce que** l'élément de déverrouillage (3) présente un axe de rotation et une saillie de déverrouillage (3.7) qui déborde d'un côté de l'axe de rotation et **en ce que** le cliquet peut être relevé au-dessus de l'élément de blocage (21.1) en faisant tourner l'élément de déverrouillage après l'avoir inséré.

6. Système de fiche de raccordement selon l'une des revendications précédentes, **caractérisé en ce que** l'élément de réception (22) est un composant séparé qui n'est pas formé d'un seul tenant avec le reste de la partie de fiche et **en ce qu'**il est fixé sur le reste de la partie de fiche, de préférence par une came de fixation (22.5).

7. Système de fiche de raccordement selon l'une des revendications 1 à 5, **caractérisé en ce que** l'élément de réception (22) est formé directement sur le boîtier de la partie de fiche et est formé d'un seul tenant avec ce dernier.

8. Système de fiche de raccordement selon les revendications 1 ou 2, **caractérisé en ce que** l'élément de réception est configuré comme élément de fixation (23) placé sur la partie de fiche (2) et par lequel l'élément élastique peut être déplacé pour libérer la liaison encliquetée lorsque l'élément de déverrouillage (3) a été inséré.

9. Système de fiche de raccordement selon la revendication 8, **caractérisé en ce que** l'élément d'actionnement (23) présente un élément de transfert (24) qui peut coulisser par rapport au cliquet (11.1) et qui peut être bloqué par rapport à l'élément élastique par l'élément de déverrouillage (3) de telle sorte que lorsque l'élément de transfert est bloqué, l'actionnement de l'élément d'actionnement entraîne un relèvement de l'élément élastique au-dessus de l'élément de blocage (21.1) de la partie de fiche (2).

10. Système de fiche de raccordement selon l'une des revendications précédentes, **caractérisé en ce que** la structure (22.1, 23.2) de l'élément de réception est une ouverture et **en ce que** la structure (3.1) de l'élément de déverrouillage est une saillie en forme de tige.

11. Système de fiche de raccordement selon la revendication 10, **caractérisé en ce que** les structures (3.1, 22.1, 23.2) de l'élément de déverrouillage (3) et de l'élément de réception ont des sections transversales qui se correspondent de telle sorte que lesdites structures peuvent être insérées étroitement l'une dans l'autre, ce qui fournit un premier codage mécanique.

12. Système de fiche de raccordement selon les revendications 10 ou 11, **caractérisé par** un deuxième codage mécanique (22.3) par des éléments géométriques qui sont prévus respectivement sur des parties de l'élément de réception et de l'élément de déverrouillage différent des structures (22.1, 23.2, 3.1) et qui, en cas de défaut de correspondance, empêchent que la fente (3.1) de l'élément de déverrouillage (3) puisse être insérée complètement dans la structure correspondante (22.1, 23.1) de la partie de fiche.

13. Système de fiche de raccordement selon l'une des revendications précédentes, dans lequel l'élément de réception (22) est un composant séparé qui n'est pas formé d'un seul tenant avec le reste de la partie de fiche, **caractérisé par** un troisième codage mécanique (22.4) de l'élément de réception (22) qui, en cas de défaut de correspondance, empêche que la partie de fiche (2) puisse être reliée à la partie de douille, d'adaptation ou d'accouplement (1).

14. Système de fiche de raccordement selon l'une des revendications précédentes, **caractérisé en ce que** l'élément de déverrouillage peut être amené dans une position dans laquelle la partie de fiche peut être séparée de la partie de douille, d'adaptation ou d'accouplement par une traction sur l'élément de déverrouillage.

15. Système de fiche de raccordement selon la revendication 14, **caractérisé en ce que** l'élément de déverrouillage (3) présente un bec d'encliquetage (3.2) qui peut être encliqueté dans une rainure d'encliquetage (22.2) de la partie de fiche (2) lorsque l'élément de déverrouillage est en position insérée.

16. Système de fiche de raccordement selon la revendication 15, **caractérisé en ce que** l'élément de déverrouillage (3) présente un levier de désencliquetage (3.5) et **en ce que** le bec d'encliquetage (3.2) peut être relevé hors de la rainure d'encliquetage (22.2) par encliquetage du levier de désencliquetage.

17. Système de fiche de raccordement selon la revendication 15, **caractérisé en ce que** l'élément de déverrouillage (3) présente une articulation (3.9), **en ce que** le bec d'encliquetage (3.2) est situé dans une partie située en avant de l'articulation et **en ce qu'**il peut être relevé hors de la rainure d'encliquetage (22.2) en repoussant la partie arrière de l'élément de déverrouillage.

18. Système de fiche de raccordement selon la revendication 14, **caractérisé en ce que** l'élément de déverrouillage (3) présente une saillie de déverrouillage (3.7) qui peut être amenée en arrière d'une saillie de blocage de la partie de fiche (2), ce qui permet d'empêcher l'extraction de l'élément de déverrouillage hors de la partie de fiche.

19. Fiche pour système de fiche de raccordement selon l'une des revendications précédentes, qui présente un élément de blocage (29.1) derrière lequel un cliquet (11.1) d'une douille, d'un adaptateur ou d'un accouplement peut être encliqueté,
la fiche présentant en supplément un élément de réception (22) dans lequel est prévue une structure (22.1) dans laquelle une structure (3.1) de section transversale correspondante d'un élément de déverrouillage (3) peut être insérée,
la structure de l'élément de réception étant configurée et disposée de telle sorte que lorsque la structure de l'élément de déverrouillage a été insérée, elle peut relever le cliquet de la douille, de l'adaptateur ou de l'accouplement au-dessus de l'élément de blocage.
